# EUROPÄISCHE PATENTANMELDUNG

(11) **EP 2 728 320 A1**
(43) Veröffentlichungstag der Anmeldung: **07.05.2014**
(21) Anmeldenummer: 13004614.7
(22) Anmeldetag: 23.09.2013
(51) Int. Cl.: G01F 25/00, G01F 1/22

(54) **Verfahren zur Bestimmung des Durchflusses nach dem Schwebekörperprinzip und entsprechende Vorrichtung**

(30) Priorität: 02.11.2012 DE 102012021363
(71) Anmelder: Krohne Messtechnik GmbH, 47058 Duisburg (DE)
(72) Erfinder: Mertmann, Philipp, 44869 Bochum (DE)
(74) Vertreter: Gesthuysen Patent- und Rechtsanwälte

(57) **Zusammenfassung**

Beschrieben und dargestellt ist ein Verfahren zur Messung des Durchflusses eines strömenden Mediums nach dem Schwebekörperprinzip.

Die Aufgabe besteht darin, ein Verfahren zur Messung des Durchflusses nach dem Schwebekörperprinzip vorzuschlagen, das sich durch eine Vereinfachung der Ermittlung der Kalibrationsdatensätze auszeichnet.

Die Aufgabe ist dadurch gelöst, dass mit mindestens einem Referenzmedium und unter mindestens einer Referenzmessbedingung mindestens ein Satz von Kalibrationsdaten aufgenommen wird. Anschließend wird unter einer sich von der Referenzbedingung unterscheidenden Messbedingung eine vom strömenden Medium abhängige Position eines Schwebekörpers (1) ermittelt. Dabei wird ein Maß für den Durchfluss des Mediums ausgehend von dem Satz von Kalibrationsdaten, von einer Umrechnung des Satzes von Kalibrationsdaten von der Referenzmessbedingung auf die Messbedingung und von der ermittelten Position bestimmt. Weiterhin bezieht sich die Erfindung auf eine Vorrichtung zur Bestimmung des Durchflusses nach dem Schwebekörperprinzip.

## Beschreibung

Die Erfindung betrifft ein Verfahren zur Bestimmung des Durchflusses eines strömenden Mediums nach dem Schwebekörperprinzip. Weiterhin bezieht sich die Erfindung auf eine Vorrichtung zur Bestimmung des Durchflusses eines strömenden Mediums nach dem Schwebekörperprinzip mit mindestens einem Schwebekörper und mindestens einem von dem Medium durchströmbaren Messrohr, wobei der Schwebekörper im Messrohr entlang einer Achse bewegbar ist.

Messgeräte, die den Durchfluss eines Mediums, insbesondere eines Fluids wie beispielsweise Flüssigkeiten oder Gase mittels des Schwebekörperverfahrens ermitteln, verfügen zumeist über ein Messrohr, das vertikal - also in Richtung des Erdschwerefelds - angeordnet ist. Das Messrohr, das von dem zu messenden Medium durchströmt wird, verfügt zumeist über einen konischen, sich in Fließrichtung aufweitenden Innenraum. In dem Konus befindet sich ein in Strömungsrichtung beweglicher Schwebekörper. Das Medium strömt dabei entgegen der Kraftwirkungsrichtung des Erdschwerefeldes, d. h. von unten nach oben.

Das strömende Medium übt in Strömungsrichtung eine Kraft auf den Schwebekörper aus, die abhängig vom Strömungswiderstand des Schwebkörpers ist. Zudem wirkt in Strömungsrichtung noch der Auftrieb des Schwebekörpers. Entgegen der Strömungsrichtung wirkt die Gewichtskraft, so dass auf den Schwebekörper insgesamt drei Kräfte wirken: zwei in Strömungsrichtung und eine in entgegengesetzter Richtung. Nach einem Einschwingverhalten bleibt der Schwebekörper auf einer Höhe stehen, in der die drei Kräfte gerade ausgeglichen sind. Da dadurch die Position, d. h. die Höhenstellung des Schwebekörpers im Messrohr vom Durchfluss des Mediums abhängig ist, erlaubt dieser Wert den Rückschluss auf den Durchfluss.

Bestimmen lässt sich die Höhe beispielsweise dadurch, dass der Schwebekörper in einem Schauglas, das mit einer entsprechenden Skala versehen ist, angeordnet ist. Alternativ ist - wie in der Patentschrift DE 196 39 060 C2 beschrieben - der Schwebekörper mit einem Permanentmagneten verbunden.

Der Durchfluss des Mediums ergibt sich aus der ermittelten Höhe in Abhängigkeit von einer Durchflusszahl α. Die Durchflusszahl α ist wiederum abhängig von der geometrischen Form des Messrohrs und der des Schwebekörpers und von der Ruppelzahl Ru, die mediumsspezifische Parameter wie Viskosität und Dichte umfasst (siehe z. B. die Gebrauchsmusterschrift DE 83 17 576 U1), die jedoch nicht vom Durchfluss abhängig ist, im Gegensatz zur Reynoldszahl. Für die Umsetzung des Messprinzips in entsprechenden Messgeräten wird daher spezifisch für jeden Messgerätetyp, also für baugleiche Messgeräte, ein Datensatz mit der Durchflusszahl α in Abhängigkeit von der Höhe h und der Ruppelzahl Ru für das zu messenden Medium bzw. für eine Vielzahl von möglichen Medien ermittelt - somit ergibt sich der funktionelle Zusammenhang α = f(h, Ru) - und für die Auswertung hinterlegt. Dabei ist jeder Datensatz insbesondere abhängig vom gemessenen Medium.

Nachteilig ist, dass das Ermitteln der Kalibrationsdatensätze sehr aufwändig und damit langwierig und kostenintensiv ist, da insbesondere für jedes Medium eine Messreihe durchgeführt werden muss.

Bekannt ist es weiterhin, dass die Messrohre nicht nur vertikal, sondern auch horizontal angeordnet sind, wobei die Gewichtskraft durch die Federkraft einer auf den Schwebekörper wirkenden Feder ersetzt wird.

Da die für die Messungen erforderlichen Kalibrationsdatensätze auch abhängig von der Ausrichtung des Messrohrs bzw. der Art der auf den Schwebekörper wirkenden Kräfte sind, ist es für eine vertikale Anordnung des Messrohrs erforderlich, zusätzliche Kalibrationsdaten zu generieren.

Die der Erfindung zugrundeliegende Aufgabe besteht daher darin, ein Verfahren zur Messung des Durchflusses nach dem Schwebekörperprinzip vorzuschlagen, das sich durch eine Vereinfachung der Ermittlung der Kalibrationsdatensätze auszeichnet.

Die oben aufgezeigte Aufgabe ist erfindungsgemäß zunächst und im Wesentlichen bei dem in Rede stehenden Verfahren dadurch gelöst, dass mit mindestens einem Referenzmedium und unter mindestens einer Referenzmessbedingung mindestens ein Satz von Kalibrationsdaten aufgenommen wird. Nach dieser Vorbereitung wird unter einer sich von der Referenzbedingung unterscheidenden Messbedingung eine vom strömenden Medium abhängige Position eines Schwebekörpers ermittelt. Dies ist die eigentliche Messung, wobei das strömende Medium in einer Ausgestaltung im Wesentlichen dem Referenzmedium entspricht. Dabei wird - bei der eigentlichen Durchflussmessung - ausgehend von dem Satz von Kalibrationsdaten, von einer Umrechnung des Satzes von Kalibrationsdaten von der Referenzmessbedingung auf die Messbedingung und von der ermittelten Position ein Maß für den Durchfluss des Mediums bestimmt. Erfindungsgemäß werden die Bestimmung der Kalibrationsdaten und die eigentliche Messung des Durchflusses in der Anwendung unter wenigstens einer unterschiedlichen (Referenz-)Messbedingung ermittelt. Um die Kalibrationsdaten für die eigentliche Messung dennoch verwenden zu können, wird dann von der Kalibrationsmessbedingung auf die Messbedingung während der eigentlichen Messung des Durchflusses umgerechnet. Dies erlaubt es, einen einmal gewonnenen Kalibrationsdatensatz auch für unterschiedliche Messbedingungen anzuwenden, insofern die Art der Transformation der Daten des Datensatzes bekannt ist.

In einer Ausgestaltung wird der Satz von Kalibrationsdaten unter einem ersten Winkel einer Bewegung des Schwebekörpers relativ zum Erdschwerefeld-also zur Erstreckungsrichtung der Kraftwirkung des Erdschwerefeldes - aufgenommen; der erste Winkel entspricht in der Praxis also dem Neigungswinkel des Messrohrs gegenüber der Vertikalen. Bei der eigentlichen Durchflussmessung wird die Position des Schwebekörpers unter einem zweiten Winkel der Bewegung des Schwebekörpers relativ zum Erdschwerefeld ermittelt. Dabei unterscheiden sich der erste Winkel und der zweite Winkel voneinander. Der Schwebekörper bewegt sich aufgrund des strömenden Mediums und der Gewichtskraft oder einer anderen auf den Schwebekörper (z. B. einer Federkraft) wirkenden Kraft entlang einer Achse, die zumeist eine Längsachse des den Schwebekörper umgebenden Messrohrs ist. Diese Achse kann nun unterschiedlich relativ zum Erdschwerefeld orientiert sein. Dabei unterscheiden sich in der Ausgestaltung die jeweiligen Winkel zwischen der Längsachse und dem Erdschwerefeld voneinander.

In einer konkreten Umsetzung der vorhergehenden Ausgestaltung wird der Satz von Kalibrationsdaten bei einer horizontalen Bewegung des Schwebekörpers aufgenommen. Für die Kalibrierung bewegt sich der Schwebekörper horizontal auf- und abwärts, wobei das Medium insbesondere nach oben, d. h. entgegen dem Schwerefeld strömt. Vom Schwebekörper wird dabei die Höhe als relevante Position ermittelt. Bei der eigentlichen Durchflussmessung wird die Position des Schwebekörpers bei einer vertikalen Bewegung des Schwebekörpers in Richtung entgegen der Federkraft einer Feder ermittelt. Da bei der horizontalen Bewegung die Gewichtskraft als gleichsam rückstellende Kraft wegfällt, wird eine Feder vorgesehen, die entgegen der Strömungsrichtung auf den Schwebekörper einwirkt. Um die Kalibrationsdaten auch für die horizontale Bewegung verwenden zu können, wird für die Ermittlung des Maßes für den Durchfluss des Mediums der Satz von - vertikal ermittelten-Kalibrationsdaten derartig umgerechnet, indem beachtet wird, dass eine Gewichtskraft durch die Federkraft der Feder ersetzt wird. Für die Umrechnung ist es daher auch erforderlich, dass die Kenngrößen der verwendeten Feder bekannt sind. Unter Feder sei dabei allgemein ein federndes Element oder eine Anordnung von einzelnen Federelementen verstanden.

Bezogen sich in den vorhergehenden Ausgestaltungen die Referenzmessbedingung und die Messbedingungen auf die Orientierung der Achse, der entlang sich der jeweilige Schwebekörper bewegt, so widmen sich die folgenden Ausgestaltungen weiteren Bedingungen. Dabei unterscheidet sich je nach Ausgestaltung des erfindungsgemäßen Verfahrens nur eine Bedingung zwischen der Aufnahme der Kalibrationsdaten bzw. der eigentlichen Messung oder es muss für die Ermittlung des Durchflusswertes auf mehrere unterschiedliche Bedingungen eingegangen werden, um die einmal ermittelten Kalibrationsdaten verwenden zu können.

In einer Ausgestaltung werden der Satz von Kalibrationsdaten mit einer ersten Geometrie des Schwebekörpers aufgenommen und die Position des Schwebekörpers mit einer zweiten Geometrie des Schwebekörpers ermittelt. Dabei unterscheiden sich die erste Geometrie und die zweite Geometrie voneinander.

Der Schwebekörper ist in dieser Ausgestaltung jeweils anders ausgestaltet, wobei die Umrechnung der Kalibrationsdaten hierauf Rücksicht nimmt.

In einer alternativen oder ergänzenden Ausgestaltung wird der Satz von Kalibrationsdaten mit einer ersten Geometrie eines den Schwebekörper umgebenden Messrohrs aufgenommen. Bei der Durchflussmessung wird die Position des Schwebekörpers mit einer zweiten zur ersten Geometrie unterschiedlichen Geometrie des Messrohrs ermittelt. In dieser Ausgestaltung wird insbesondere Rücksicht genommen auf das Design des Messrohrs bzw. speziell des Bereichs, in dem sich der Schwebekörper bewegt.

Die zuvor hergeleitete und aufgezeigte Aufgabe ist nach einer weiteren Lehre der Erfindung bei der eingangs genannten Vorrichtung zur Bestimmung des Durchflusses eines strömenden Mediums nach dem Schwebekörperprinzip dadurch gelöst, dass mindestens eine Auswerteeinheit vorgesehen ist, wobei die Auswerteeinheit zur Umsetzung des Verfahrens nach einer der obigen Ausgestaltungen ausgestaltet ist. Die Auswerteeinheit nimmt dabei insbesondere die Umrechnung des mindestens einen Satzes von Kalibrationsdaten vor. Dabei ist die Auswerteeinheit in einer Ausgestaltung in der Nähe der eigentlichen Messeinrichtung vorhanden und bildet damit ggf. einen kompakten Sensor. In einer alternativen Ausgestaltung ist die Auswerteeinheit weiter vom Messrohr entfernt und ist ggf. sogar in einer Leitwarte angeordnet.

In einer Ausgestaltung ist mindestens eine Feder vorgesehen ist. Dabei sind der Schwebekörper und die Feder derartig ausgestaltet, aufeinander abgestimmt und relativ zueinander angeordnet, dass die Feder mit einer vorgebbaren Federkraft auf den Schwebekörper einwirkt. Die Feder wirkt insbesondere vorzugsweise entlang einer Achse, auf der sich der Schwebekörper bewegt, entgegen der Durchflussrichtung des zu messenden Mediums. Dabei ist die Feder in einer Ausgestaltung ein einstückiges Federelement und setzt sich in einer alternativen Ausgestaltung aus einer Mehrzahl von einzelnen Federelementen zusammen.

In einer Ausgestaltung ist mindestens eine Speichereinheit zur Speicherung mindestens eines Satzes von Kalibrationsdaten vorgesehen. Auf diese Daten greift vorzugsweise die Auswerteeinheit zu, um die Umrechnung in Bezug auf die von der Referenzmessbedingung bzw. den Referenzmessbedingungen abweichende Messbedingung bzw. abweichenden Messbedingungen vorzunehmen.

In einer Ausgestaltung ist mindestens ein Neigungssensor vorgesehen. Dieser erlaubt insbesondere die Ermittlung der Neigung der Achse, der entlang sich der Schwebekörper während der Durchflussmessung bewegt. Der ermittelte Winkel wird vorzugsweise der Auswerteeinheit für die Umrechnung der Kalibrationsdaten auf die aktuelle Messbedingung übergeben.

In einer Variante ist das Messrohr für eine horizontale Anordnung ausgestaltet. Dabei ist in der Speichereinheit mindestens ein Satz von mit einem vertikal angeordneten Messrohr ermittelten Kalibrationsdaten gespeichert. Bei der horizontalen Anordnung ersetzt insbesondere die oben genannte Feder die Wirkung der Gewichtskraft.

Im Einzelnen gibt es nun eine Vielzahl von Möglichkeiten, das erfindungsgemäße Verfahren und die erfindungsgemäße Vorrichtung auszugestalten und weiterzubilden. Dazu wird verwiesen einerseits auf die den Patentansprüchen 1 und 6 nachgeordneten Patentansprüche, andererseits auf die folgende Beschreibung von Ausführungsbeispielen in Verbindung mit der Zeichnung. In der Zeichnung zeigen
- Fig. 1: einen Teil einer schematischen Anordnung zur Durchflussmessung im Schnitt,
- Fig. 2: einen Teil einer weiteren Anordnung zur Durchflussmessung und
- Fig. 3: eine schematische Darstellung einer Vorrichtung zur Durchflussmessung.

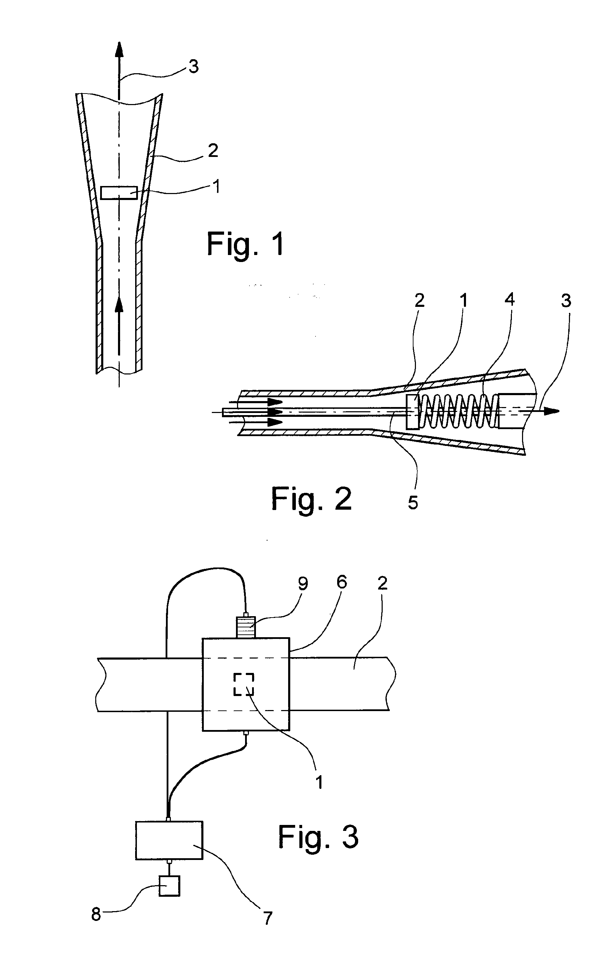

Die Fig. 1 zeigt schematisch eine Anordnung zur Messung des Durchflusses eines - hier nicht dargestellten - Mediums nach dem Schwebekörperprinzip. Hierfür ist ein Schwebekörper 1 in einem teilweise konisch ausgestalteten Messrohr 2 beweglich angeordnet. Die Orientierung ist dabei vertikal, so dass insbesondere der Schwebekörper 1 Bewegungen längs der in Richtung des Erdschwerefeld verlaufenden Achse 3 vollführt. Dabei ist insbesondere der Schwebekörper 1 rotationssymmetrisch ausgeführt. Die Strömungsrichtung des Mediums ist durch den Pfeil angedeutet und verläuft von unten nach oben.

Das Medium und der Auftrieb bewegen den Schwebekörper 1 nach oben und die Gewichtskraft wirkt in entgegengesetzter Richtung nach unten. Bei einer gewissen Höhe des Schwebekörpers 1 gleichen sich die Kräfte gerade gegenseitig aus und der Schwebekörper 1 schwebt nach einer gewissen Einschwingphase. Die Höhe bzw. allgemein die Position, auf der der Schwebekörper zur Ruhe kommt, ist dabei ein Maß für den Durchfluss des Mediums. Dabei ist zu beachten, dass die Höhe ein paar Abhängigkeiten von der Geometrie des Schwebekörpers, des umgebenden Messrohrs, der Viskosität und der Dichte des Mediums aufweist. Daher werden für die zu messenden Medien Kalibrationsdaten aufgenommen, die von der Höhe und der Ruppelzahl abhängen, wobei letztere die Abhängigkeit vom Medium beschreibt.

In der Fig. 2 ist eine horizontale Anordnung des Messrohrs 2 dargestellt. Hier bewegt sich der Schwebekörper 1 entlang der Achse 3 im Wesentlichen senkrecht zum Erdschwerefeld. Das - nicht dargestellte - Medium bewegt sich ebenfalls horizontal (angedeutet durch die Pfeile). Da bei dieser Orientierung die Gewichtskraft wie im Aufbau der Fig. 1 fehlt, wirkt in der horizontalen Ausrichtung eine Feder 4 dem Medium entgegen, bis sich der Schwebekörper 1 auf einer Position befindet, in der sich die wirkenden Kräfte gegenseitig aufheben. Diese Position ist ebenfalls ein Maß für den Durchfluss, wobei auch hier passende Kalibrationsdaten erforderlich sind.

Um den Aufwand bezüglich der Erzeugung der Kalibrationsdaten zu reduziren, wird erfindungsgemäß ein Satz von Kalibrationsdaten unter einer Referenzmessbedingung ermittelt und unter einer davon unterschiedlichen Messbedingung verwendet, wobei eine Verrechnung von der Referenzmessbedingung auf die Messbedingung vorgenommen wird.

So wird beispielsweise mit einer Anordnung gemäß der Fig. 1 und der Referenzmessbedingung vertikale Anordnung des Messrohrs 2 wenigstens ein Satz von Referenzdaten gewonnen. Die eigentliche Durchflussmessung erfolgt dann mit dem Aufbau gemäß der Fig. 2 unter der Messbedingung, dass der Schwebekörper 1 sich horizontal bewegt. Die Kalibrierungsdaten beziehen sich dann vorzugsweise auf das gleiche Medium und auch die gleichen Geometrien, jedoch findet eine Umrechnung statt, da nicht die Gewichtskraft, sondern die Federkraft der Feder 4 in der horizontalen Orientierung auf den Schwebekörper 1 wirkt.

Eine Vorrichtung, in der das erfindungsgemäße Verfahren umgesetzt ist, zeigt die Fig. 3.

In einem horizontal ausgerichteten Rohr ist eine Primärmesseinrichtung 6 eingebracht, die entsprechend der Ausgestaltung der Fig. 2 ausgebildet ist und die die Messung des Durchflusses eines Mediums durch den Schwebekörper 1 erlaubt. Diese Primärmesseinrichtung 6 verfügt insbesondere über eine Detektionseinheit, die es erlaubt, die Position des Schwebekörpers 1 zu ermitteln. Dies funktioniert beispielsweise dadurch, dass der Schwebekörper 1 mit einem Permanentmagneten versehen ist, dessen Position außerhalb des Messrohrs bestimmbar ist. Die ermittelte Position des Schwebekörpers 1 wird an die Auswerteinheit 7 übergeben, die zudem noch Zugriff auf die Speichereinheit 8 hat, in der der mindestens eine Satz an Kalibrationsdaten aus einer vertikalen Messung - also beispielsweise über eine Anordnung wie in der Fig. 1 - hinterlegt ist.

An der Primärmesseinrichtung 6 ist in der dargestellten Ausführung ein Neigungssensor 9 vorgesehen, der die Ermittlung der Orientierung der Achse des Messrohrs der Primärmesseinrichtung 6 erlaubt. Je nach der Ausrichtung kann jedoch auch auf den Neigungssensor 6 verzichtet werden.

Ausgehend von der Orientierung des Messrohrs der Primärmesseinrichtung 6 wird in der Auswerteeinheit 7 eine Umrechnung der Kalibrationsdaten vorgenommen, wobei insbesondere die Gewichtskraft auf die entsprechend bekannte und entsprechend hinterlegte Federkraft umgerechnet wird.

Dadurch ermittelt die Auswerteeinheit 7 ein Maß für den horizontalen Durchfluss des Mediums ausgehend von den im vertikalen Aufbau ermittelten Kalibrationsdaten.

## Patentansprüche

1. Verfahren zur Bestimmung des Durchflusses eines strömenden Mediums nach dem Schwebekörperprinzip, wobei mit mindestens einem Referenzmedium und unter mindestens einer Referenzmessbedingung mindestens ein Satz von Kalibrationsdaten aufgenommen wird, wobei unter einer sich von der Referenzbedingung unterscheidenden Messbedingung eine vom strömenden Medium abhängige Position eines Schwebekörpers (1) ermittelt wird und wobei ausgehend von dem Satz von Kalibrationsdaten, von einer Umrechnung des Satzes von Kalibrationsdaten von der Referenzmessbedingung auf die Messbedingung und von der ermittelten Position ein Maß für den Durchfluss des Mediums bestimmt wird.

2. Verfahren nach Anspruch 1, **dadurch gekennzeichnet, dass** der Satz von Kalibrationsdaten unter einem ersten Winkel einer Bewegung des Schwebekörpers (1) relativ zum Erdschwerefeld aufgenommen wird, dass die Position des Schwebekörpers (1) unter einem zweiten Winkel der Bewegung des Schwebekörpers (1) relativ zum Erdschwerefeld ermittelt wird, und dass sich der erste Winkel und der zweite Winkel voneinander unterscheiden.

3. Verfahren nach Anspruch 2, **dadurch gekennzeichnet, dass** der Satz von Kalibrationsdaten bei einer horizontalen Bewegung des Schwebekörpers (1) aufgenommen wird, dass die Position des Schwebekörpers (1) bei einer vertikalen Bewegung des Schwebekörpers (1) in Richtung entgegen der Federkraft einer Feder (4) ermittelt wird, und dass für die Ermittlung des Maßes für den Durchfluss des Mediums der Satz von Kalibrationsdaten umgerechnet wird, indem beachtet wird, dass eine Gewichtskraft durch die Federkraft der Feder (4) ersetzt wird.

4. Verfahren nach einem der Ansprüche 1 bis 3, **dadurch gekennzeichnet, dass** der Satz von Kalibrationsdaten mit einer ersten Geometrie des Schwebekörpers (1) aufgenommen wird und dass die Position des Schwebekörpers (1) mit einer zweiten Geometrie des Schwebekörpers (1) ermittelt wird, wobei sich die erste Geometrie und die zweite Geometrie voneinander unterscheiden.

5. Verfahren nach einem der Ansprüche 1 bis 4, **dadurch gekennzeichnet, dass** der Satz von Kalibrationsdaten mit einer ersten Geometrie eines den Schwebekörper (1) umgebenden Messrohrs (2) aufgenommen wird und dass die Position des Schwebekörpers (1) mit einer zweiten Geometrie des Messrohrs (2) ermittelt wird, und wobei sich die erste Geometrie und die zweite Geometrie voneinander unterscheiden.

6. Vorrichtung zur Bestimmung des Durchflusses eines strömenden Mediums nach dem Schwebekörperprinzip mit mindestens einem Schwebekörper (1) und mindestens einem von dem Medium durchströmbaren Messrohr (2), wobei der Schwebekörper (1) im Messrohr (2) entlang einer Achse (3) bewegbar ist,
**dadurch gekennzeichnet,**
**dass** mindestens eine Auswerteeinheit (7) vorgesehen ist und dass die Auswerteeinheit (7) zur Umsetzung des Verfahrens nach einem der Ansprüche 1 bis 5 ausgestaltet ist.

7. Vorrichtung nach Anspruch 6, **dadurch gekennzeichnet, dass** mindestens eine Feder (4) vorgesehen ist und dass der Schwebekörper (1) und die Feder (4) derartig ausgestaltet, aufeinander abgestimmt und relativ zueinander angeordnet sind, dass die Feder (4) mit einer vorgebbaren Federkraft auf den Schwebekörper (1) einwirkt.

8. Vorrichtung nach Anspruch 6 oder 7, **dadurch gekennzeichnet, dass** mindestens eine Speichereinheit (8) zur Speicherung mindestens eines Satzes von Kalibrationsdaten vorgesehen ist.

9. Vorrichtung nach einem der Ansprüche 6 bis 8, **dadurch gekennzeichnet, dass** mindestens ein Neigungssensor (9) vorgesehen ist.

10. Vorrichtung nach Anspruch 8, **dadurch gekennzeichnet, dass** das Messrohr (2) für eine horizontale Anordnung ausgestaltet ist und dass in der Speichereinheit (8) mindestens ein Satz von mit einem vertikal angeordneten Messrohr (2) ermittelten Kalibrationsdaten gespeichert ist.
